# EUROPEAN PATENT SPECIFICATION

(11) **EP 1 537 180 B1**
(45) Date of publication and mention of the grant of the patent: **12.10.2011**
(21) Application number: 03795270.2
(22) Date of filing: 29.08.2003
(51) Int. Cl.: C09B 43/11, C09B 29/42, C09B 29/36

(54) **PROCESS FOR PREPARING AZO COMPOUND**
VERFAHREN ZUR HERSTELLUNG EINER AZOVERBINDUNG
PROCEDE D'ELABORATION DE COMPOSE AZO

(30) Priority: 10.09.2002 JP 2002264253; 28.05.2003 JP 2003150558
(43) Date of publication of application: 08.06.2005
(73) Proprietor: FUJIFILM Corporation, Minato-ku Tokyo (JP)
(72) Inventor: KANEKO, Yushi,, Minami-Ashigara-shi, Kanagawa 250-0123 (JP); TAKAHASHI, Noriko, 250-0123 (JP); MATSUOKA, Koshin,, Minami-Ashigara-shi, Kanagawa 250-0123 (JP)
(74) Representative: Grünecker, Kinkeldey, Stockmair & Schwanhäusser Anwaltssozietät
(86) International application number: PCT/JP2003/011116
(87) International publication number: WO 2004/024827

(56) References cited:
- WO-A-02/083662
- PATENT ABSTRACTS OF JAPAN vol. 2002, no. 04, 4 August 2002 (2002-08-04) -& JP 2001 335714 A (FUJI PHOTO FILM CO LTD), 4 December 2001 (2001-12-04) & US 6 489 452 A 3 December 2002 (2002-12-03)

## Description

### TECHNICAL FIELD

The present invention relates to preparation processes of azo compounds useful as functional compounds such as dyes and pharmaceuticals, and intermediates or raw materials therefor.

### BACKGROUND ART

As a method for introducing an aryl or heteryl group in an azo dye represented by the formula (I) and having aryl and heteryl diazo components and a pyridine coupler, reported is, as described in JP-A-2002-371079 (the term "JP-A" as used herein means an "unexamined published Japanese patent application"), a process of reacting an azo dye having a pyrazolediazo component and a pyridine coupler with chlorobenzothiazole in a polar aprotic solvent such as DMSO under basic conditions. Owing to a complex reaction system and tendency to form byproducts, this method does not provide a satisfactory yield. There is accordingly a demand for a process capable of efficiently synthesizing the compound represented by the formula (I).

### DISCLOSURE OF THE INVENTION

An object of the present invention is therefore to overcome the above-described conventional problem and provide a process for preparing a compound of the formula (I) safely at a low cost in a high yield.

The above-described object can be attained by employing the following process for the preparation of the compound represented by the formula (I).
1. A process for preparing a compound represented by the formula (I) below, which comprises reacting a compound represented by the formula (II) below with at least one of an arylating and heterylating agents represented by the formula (III) below, in the presence of a base and a phase transfer catalyst: 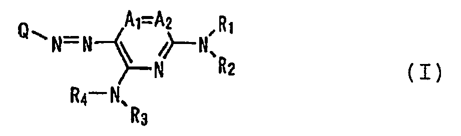
   wherein Q represents an aryl or heterocyclic group,
   R₁ represents an aryl or heterocyclic group,
   R₂ represents an alkyl, cycloalkyl, alkenyl, aryl, heterocyclic, sulfonyl, acyl or carbamoyl group,
   R₃ and R₄ each independently represents a hydrogen atom or an alkyl, cycloalkyl, alkenyl, aryl, heterocyclic, sulfonyl, acyl or carbamoyl group, with the proviso that R₃ and R₄ do not represent a hydrogen atom at the same time, and
   A₁ and A₂ each are a substituted or unsubstituted carbon atom, or one of A₁ and A₂ represents a substituted or unsubstituted carbon atom and the other represents a nitrogen atom; 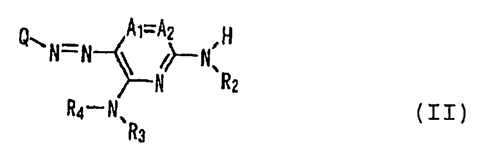
   wherein Q, R₂, R₃, R₄, A₁ and A₂ have the same meanings as Q, R₂, R₃, R₄, A₁ and A₂ defined in the formula (I),
   respectively;

   R₁-X (III)

   wherein R¹ has the same meaning as R¹ defined in the formula (I) and X represents a halogen atom or a sulfonyloxy group.
2. The process as described in the item 1, wherein Q in the formulas (I) and (II) represents pyrazole, thiazole, 1,2,4-thiadiazole, 1,3,4-thiadiazole, benzothiazole, triazole or imidazole.
3. The process as described in the item 1, wherein the compound represented by the formula (I) is a compound represented by the formula (IV) below and the compound represented by the formula (II) is a compound represented by the formula (V) below: 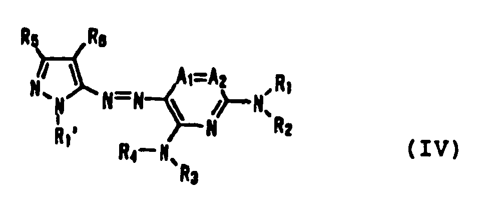 wherein R₁' represents an aryl or heterocyclic group, R₁, R₂, R₃, R₄, A₂ and A₂ have the same meanings as R₁, R₂, R₃, R₄, A₁ and A₂ in the formula (I), respectively, R₅ represents a hydrogen atom or an alkyl, cycloalkyl, aryl, heterocyclic or acyl group, and R₆ represents a hydrogen atom, a halogen atom or a cyano group; 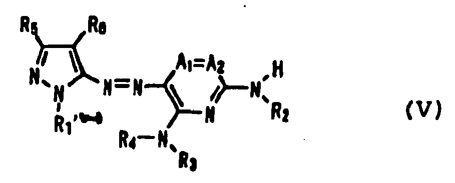 wherein R₁' represents an aryl group or a heterocyclic group, R₂, R₃, R₄, R₅, R₆, A₁ and A₂ have the same meanings as R₂, R₃, R₄, R₅, R₆, A₁ and A₂ in the formula (IV), respectively, represents
4. The process as described in the item 1, wherein the compound represented by the formula (I) is a compound represented by the formula (IV) below and the compound represented by the formula (II) is a compound represented by the formula (V) below: 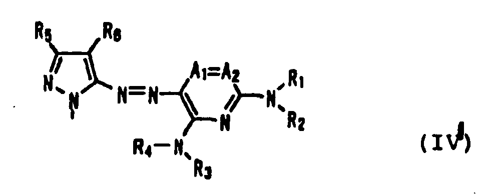 wherein R₁, R₂, R₃, R₄, A₁ and A₂ have the same meanings as R₁, R₂, R₃, R₄, A₁ and A₂ in the formula (I), respectively, R₅ represents a hydrogen atom or an alkyl, cycloalkyl, aryl, heterocyclic or acyl group, and R₆ represents a hydrogen atom, a halogen atom or a cyano group; 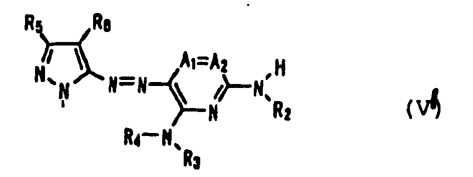 wherein R₂, R₃, R₄, R₅, R₆, A₁ and A₂ have the same meanings as R₂, R₃, R₄, R₅, R₆, A₁ and A₂ in the formula (IV), respectively,
5. The process as described in any one of the items 1 to 4, wherein the compound represented by the formula (III) is a compound represented by the formula (VI) below: 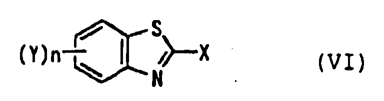 wherein X has the same meaning as defined in the formula (III), Y represents a substituent, and n represents an integer of from 0 to 4.
6. The process as described in any one of the items 1 to 5, wherein the reaction is carried out in the presence of a mixed solvent including an organic solvent and water, and a volume ratio of the organic solvent to water is a range of from 1:100 to 100:1.
7. The process as described in any one of the items 1 to 6, wherein the phase transfer catalyst is at least one selected from the group consisting of quaternary ammonium salts, quaternary phosphonium salts and ether compounds.
8. The process as described in any one of the items 1 to 7, wherein the base is an inorganic base.
9. The process as described in any one of the items, wherein the base is used in an amount of 100 equivalents or less in the number of moles, to the compound represented by the formula (II).
10. The process as described in any one of the items 1 to 9, wherein the phase transfer catalyst is used in an amount of 0.001 to 2 equivalents in the number of moles, to the compound represented by the formula (II).
11. The process as described in any one of the items 1 to 10, wherein the reaction is carried out while filling the reaction system with an inert gas.
12. The process as described in any one of the items 1 to 11, wherein the reaction temperature is from 50°C to 150°C.
13. The process as described in any one of the items 1 to 12, wherein the reaction time is 3 to 12 hours and the reaction temperature is 80 to 120°C.
14. The process as described in any one of the items 1 to 13, wherein one of the arylating and heterylating agents represented by the formula (III) is used in an amount of 20 equivalents or less in the number of moles, to the compound represented by the formula (II).

### BEST MODES OF CARRYING OUT THE INVENTION

The present invention will hereinafter be described in more detail.

First, compounds of the invention represented by the formula (I) will be described specifically.

In the formula (I), Q represents an aryl or heterocyclic group. The aryl group may be a substituted or unsubstituted aryl group.

Examples of the substituent for the substituted aryl group and heterocyclic group include halogen atoms, alkyl groups, cycloalkyl groups, alkenyl groups, cycloalkenyl groups, alkynyl groups, aryl groups, heterocyclic groups, cyano group, hydroxyl group, nitro group, carboxyl group, alkoxy groups, aryloxy groups, silyloxy groups, heterocyclic oxy groups, acyloxy groups, carbamoyloxy groups, alkoxycarbonyloxy groups, aryloxycarbonyloxy groups, amino groups (including alkylamino groups and anilino groups), acylamino groups, aminocarbonylamino groups, alkoxycarbonylamino groups, aryloxycarbonylamino groups, sulfamoylamino groups, alkyl- or aryl-sulfonylamino groups, mercapto group, alkylthio groups, arylthio groups, heterocyclic thio groups, sulfamoyl groups, sulfo group, alkyl- or aryl-sulfinyl groups, alkyl- or aryl-sulfonyl groups, acyl groups, aryloxycarbonyl groups, alkoxycarbonyl groups, carbamoyl groups, aryl- or heterocyclic-azo groups, imide groups, phosphino groups, phosphinyl groups, phosphinyloxy groups, phosphynylamino groups and silyl groups.

The above-described substituents for the substituted aryl group will next be described more specifically. Halogen atoms (such as chlorine, bromine and iodine atoms); alkyl groups (linear or branched, substituted or unsubstituted alkyl groups having preferably 1 to 30 carbon atoms, such as methyl, ethyl, n-propyl, isopropyl, t-butyl, n-octyl, 2-chloroethyl, 2-cyanoethyl and 2-ethylhexyl); cycloalkyl groups [preferably, substituted or unsubstituted C₃₋₁₀ cycloalkyl groups such as cyclohexyl and cyclopentyl, and polycycloalkyl groups, for example, bicycloalkyl groups (preferably substituted or unsubstituted C₅₋₃₀ bicycloalkyl groups such as bicyclo[2,2,1]heptan-2-yl and bicyclo[2,2,2]octan-3-yl) and tricycloalkyl groups, each having a polycyclic structure, of which monocyclic cycloalkyl groups and bicycloalkyl groups are preferred, with monocyclic cycloalkyl groups being especially preferred];
alkenyl groups (including liner or branched, substituted or unsubstituted alkenyl groups, preferably C₂-₃₀ alkenyl groups such as vinyl, allyl, prenyl, geranyl and oleyl, and also including the below-described cycloalkenyl groups); cycloalkenyl groups [preferably, substituted or unsubstituted C₃₋₃₀ cycloalkenyl groups such as 2-cyclopenten-1-yl and 2-cyclohexen-1-yl, and polycycloalkenyl groups such as bicycloalkenyl groups (preferably, substituted or unsubstituted C₅₋₃₀ bicycloalkenyl groups such as bicyclo[2,2,1]hept-2-en-1-yl and bicyclo[2,2,2]oct-2-en-4-yl), of which monocyclic cycloalkenyl groups being especially preferred]; alkynyl groups (preferably, substituted or unsubstituted C₂₋₃₀ alkynyl groups such as ethynyl, propargyl group and trimethylsilylethynyl),
aryl groups (preferably, substituted or unsubstituted C₆₋₃₀ aryl groups such as phenyl, p-tolyl, naphthyl, m-chlorophenyl and o-hexadecanoylaminophenyl); heterocyclic groups (preferably, 5- to 7-membered, substituted or unsubstituted, saturated or unsaturated, aromatic or nonaromatic, monocyclic or cyclocondensed heterocyclic groups, more preferably, heterocyclic groups having a ring constituent atom selected from a carbon atom, a nitrogen atom and a sulfur atom and at the same time, having at least one hetero atom selected from a nitrogen atom, an oxygen atom and a sulfur atom, more preferably 5- or 6-membered aromatic C₃₋₃₀ heterocyclic groups such as 2-furyl, 2-thienyl, 2-pyridyl, 4-pyridyl, 2-pyrimidinyl and 2-benzothiazolyl group); cyano group; hydroxyl group; nitro group; carboxyl group;
alkoxy groups (preferably, substituted or unsubstituted C₁₋₃₀ alkoxy groups such as methoxy, ethoxy, isopropoxy, t-butoxy, n-octyloxy and 2-methoxyethoxy); aryloxy groups (preferably, substituted or unsubstituted C₆₋₃₀ aryloxy groups such as phenoxy, 2-methylphenoxy, 2,4-di-t-amylphenoxy, 4-t-butylphenoxy, 3-nitrophenoxy and 2-tetradecanoylaminophenoxy); silyloxy groups (preferably, C₃₋₂₀ silyloxy groups such as trimethylsilyloxy and t-butyldimethylsilyloxy), heterocyclic oxy groups (preferably, substituted or unsubstituted C₂₋₃₀ heterocyclic oxy groups having, as a heterocyclic portion thereof, the heterocyclic portion as described above in the heterocyclic group, such as 1-phenyltetrazol-5-oxy and 2-tetrahydropyranyloxy);
acyloxy groups (preferably, a formyloxy group, substituted or unsubstituted C₂₋₃₀ alkylcarbonyloxy groups, and substituted or unsubstituted C₆₋₃₀ arylcarbonyloxy groups, such as formyloxy, acetyloxy, pivaloyloxy, stearoyloxy, benzoyloxy and p-methoxyphenylcarbonyloxy), carbamoyloxy groups (preferably, substituted or unsubstituted C₁₋₃₀ carbamoyloxy groups such as N,N-dimethylcarbamoyloxy, N,N-diethylcarbamoyloxy, morpholinocarbonyloxy, N,N-di-n-octylaminocarbonyloxy and N-n-octylcarbamoyloxy); alkoxycarbonyloxy groups (preferably, substituted or unsubstituted C₂₋₃₀ alkoxycarbonyloxy groups such as methoxycarbonyloxy, ethoxycarbonyloxy, t-butoxycarbonyloxy, and n-octylcarbonyloxy); aryloxycarbonyloxy groups (preferably, substituted or unsubstituted C₇₋₃₀ aryloxycarbonyloxy groups such as phenoxycarbonyloxy, p-methoxyphenoxycarbonyloxy group, and p-n-hexadecyloxyphenoxycarbonyloxy);
amino groups (preferably, amino group, substituted or unsubstituted C₁₋₃₀ alkylamino groups, substituted or unsubstituted C₆₋₃₀ arylamino groups, and C₀₋₃₀ heterocyclic amino groups, such as amino, methylamino, dimethylamino, anilino, N-methyl-anilino, diphenylamino, and N-1,3,5-triazin-2-ylamino), acylamino groups (preferably, a formylamino group, substituted or unsubstituted C₁₋₃₀ alkylcarbonylamino groups, and substituted or unsubstituted C₆₋₃₀ arylcarbonylamino group, such as formylamino, acetylamino, pivaloylamino, lauroylamino, benzoylamino and 3,4,5-tri-n-octyloxyphenylcarbonylamino); aminocarbonylamino groups (preferably, substituted or unsubstituted C₁₋₃₀ aminocarbonylamino groups such as carbamoylamino, N,N-dimethylaminocarbonylamino, N,N-diethylaminocarbonylamino and morpholinocarbonylamino); alkoxycarbonylamino groups (preferably, substituted or unsubstituted C₂₋₃₀ alkoxycarbonylamino groups such as methoxycarbonylamino, ethoxycarbonylamino, t-butoxycarbonylamino, n-octadecyloxycarbonylamino and N-methyl-methoxycarbonylamino);
aryloxycarbonylamino groups (preferably, substituted or unsubstituted C₇₋₃₀ aryloxycarbonylamino groups such as phenoxycarbonylamino, p-chlorophenoxycarbonylamino, and m-n-octyloxyphenoxycarbonylamino); sulfamoylamino groups (preferably, substituted or unsubstituted C₀₋₃₀ sulfamoylamino groups such as sulfamoylamino, N,N-dimethylaminosulfonylamino and N-n-octylaminosulfonylamino), alkyl- or aryl sulfonylamino groups (preferably, substituted or unsubstituted C₁₋₃₀ alkylsulfonylamino groups and substituted or unsubstituted C₆₋₃₀ arylsulfonylamino groups such as methylsulfonylamino, butylsulfonylamino, phenylsulfonylamino, 2,3,5-trichlorophenylsulfonylamino, and p-methylphenylsulfonylamino); mercapto group;
alkylthio groups (preferably, substituted or unsubstituted C₁₋₃₀ alkylthio groups such as methylthio, ethylthio and n-hexadecylthio); arylthio groups (preferably, substituted or unsubstituted C₆₋₃₀ arylthio groups such as phenylthio, p-chlorophenylthio and m-methoxyphenylthio); heterocyclic thio groups (preferably, substituted or unsubstituted C₂₋₃₀ heterocyclic thio groups having, as a heterocyclic portion thereof, the heterocyclic portion as described above in the heterocyclic group, such as 2-benzothiazolylthio group and 1-phenyltetrazol-5-ylthio); sulfamoyl groups (preferably, substituted or unsubstituted C₀₋₃₀ sulfamoyl groups such as N-ethylsulfamoyl, N-(3-dodecyloxypropyl)sulfamoyl, N,N-dimethylsulfamoyl, N-acetylsulfamoyl, N-benzoylsulfamoyl, and N-(N'-phenylcarbamoyl)sulfamoyl); sulfo group;
alkyl- or aryl-sulfinyl groups (preferably, substituted or unsubstituted C₁₋₃₀ alkylsulfinyl groups and substituted or unsubstituted C₆₋₃₀ arylsulfinyl groups, such as methylsulfinyl, ethylsulfinyl, phenylsulfinyl and p-methylphenylsulfinyl); alkyl- or aryl-sulfonyl groups (preferably, substituted or unsubstituted C₁₋₃₀ alkylsulfonyl groups and substituted or unsubstituted C₆₋₃₀ arylsulfonyl groups, such as methylsulfonyl, ethylsulfonyl, phenylsulfonyl and p-methylphenylsulfonyl), acyl groups (preferably, a formyl group, substituted or unsubstituted C₂₋₃₀ alkylcarbonyl groups and substituted or unsubstituted C₇₋₃₀ arylcarbonyl groups, such as acetyl, pivaloyl, 2-chloroacetyl, stearoyl, benzoyl, and p-n-octyloxyphenylcarbonyl); aryloxycarbonyl groups (preferably, substituted or unsubstituted C₇₋₃₀ aryloxycarbonyl groups such as phenoxycarbonyl, o-chlorophenoxycarbonyl, m-nitrophenoxycarbonyl and p-t-butylphenoxycarbonyl),
alkoxycarbonyl groups (preferably, substituted or unsubstituted C₂₋₃₀ alkoxycarbonyl groups such as methoxycarbonyl, ethoxycarbonyl, t-butoxycarbonyl and n-octadecyloxycarbonyl); carbamoyl groups (preferably, substituted or unsubstituted C₁₋₃₀ carbamoyl groups such as carbamoyl, N-methylcarbamoyl, N,N-dimethylcarbamoyl, N,N-di-n-octylcarbamoyl and N-(methylsulfonyl)carbamoyl); aryl- or heterocyclic-azo groups (preferably, substituted or unsubstituted C₆₋₃₀ arylazo groups and substituted or unsubstituted C₃₋₃₀ heterocyclic azo groups (preferably having, as a heterocyclic portion thereof, that described above in the heterocyclic group) such as phenylazo, p-chlorophenylazo, 5-ethylthio-1,3,4-thiadiazol-2-ylazo, 3-pyridylazo, 2-thiazolylazo and 2-benzothiazolylazo); imide groups (preferably, substituted or unsubstituted C₂₋₃₀ imide groups such as N-succinimide and N-phthalimide); phosphino groups (preferably, substituted or unsubstituted C₂₋₃₀ phosphino groups such as dimethylphosphino, diphenylphosphino, and methylphenoxyphosphino); phosphinyl groups (preferably, substituted or unsubstituted C₂₋₃₀ phosphinyl groups such as phosphinyl, dioctyloxyphosphinyl and diethoxyphosphinyl);
phosphinyloxy groups (preferably, substituted or unsubstituted C₂₋₃₀ phosphinyloxy groups such as diphenoxyphosphinyloxy and dioctyloxyphosphinyloxy); phosphinylamino groups (preferably, substituted or unsubstituted C₂₋₃₀ phosphinylamino groups such as dimethoxyphosphinylamino and dimethylaminophosphinylamino); and silyl groups (preferably, substituted or unsubstituted C₃₋₃₀ silyl groups such as trimethylsilyl, t-butyldimethylsilyl and phenyldimethylsilyl).

As the heterocyclic group, preferred are unsubstituted heterocyclic groups and heterocyclic groups having the above-described preferred substituents, with heterocycles having a 5-membered or 6-membered substituent being especially preferred. Examples of such a heterocyclic group include 3-pyrazolyl, 2-thiazolyl, 1,2,4-thiadiazol-3-yl, 1,3,4-thiadiazol-2-yl, 2-benzothiazolyl, triazyl and 2-imidazolyl.

R₁ represents an aryl group or a heterocyclic group. The aryl group or heterocyclic group has the same meaning as described above in Q. As R₁, preferred are substituted or unsubstituted 2-pyridyl group, 2-thienyl group, 2-thiazolyl group, 2-benzothiazolyl group, triazyl group and 2-furyl group, of which substituted or unsubstituted 2-benzothiazolyl group is more preferred.

R₂ represents an alkyl, cycloalkyl, alkenyl, aryl, heterocyclic, sulfonyl, acyl or carbamoyl group.

The alkyl group as R₂ is a linear or branched alkyl group and it may be unsubstituted or substituted. As such an alkyl group, those having 1 to 30 carbon atoms except the carbon atoms of the substituent are preferred. Examples of the alkyl group include methyl, ethyl, n-propyl, isopropyl, t-butyl, sec-butyl, n-pentyl, n-hexyl, n-heptyl, n-octyl. Examples of the substituent for the substituted alkyl group include those exemplified above as the substituent for the substituted aryl group in Q. Preferred substituents are also similar to those exemplified above in Q. Of the alkyl groups, preferred are unsubstituted alkyl groups.

The cycloalkyl group as R₂ may be a unsubstituted or substituted cycloalkyl group. Examples of the substituent for the substituted cycloalkyl group include those exemplified above as the substituent for the substituted aryl group in Q. Preferred substituents are also similar to those exemplified above in Q. Examples of such a cycloalkyl group include cyclopentyl, cyclohexyl, cycloheptyl and cyclooctyl.

The alkenyl group as R₂ may be an unsubstituted or substituted alkenyl group. Examples of the substituent for the substituted alkenyl group are those exemplified above as the substituent for the substituted aryl group in Q. Preferred substituents are also similar to those exemplified above in Q. As the alkenyl group, alkenyl groups having 2 to 30 carbon atoms except the carbon atoms of the substituent are preferred. Examples of such an alkenyl group include allyl, prenyl, geranyl and oleyl.

The alkynyl group as R₂ may be an unsubstituted alkynyl group or substituted alkynyl group. Examples of the substituent for the substituted alkynyl group include those exemplified above as the substituent for the substituted aryl group in Q. Preferred substituents are also similar to those exemplified above in Q. As the alkynyl group, alkynyl groups having 2 to 30 carbon atoms except the carbon atoms of the substituent are preferred. Examples of such an alkynyl group include thienyl and propargyl.

The aryl group as R₂ may be an unsubstituted aryl group or substituted aryl group. Examples of the substituent for the substituted aryl group include those exemplified above as the substituent for the substituted aryl group in Q. Preferred substituents are also similar to those exemplified in Q. As the aryl group as R₂, substituted aryl groups are preferred, with aryl groups each having substituents at the 2- and 6-positions thereof being more preferred. Examples of such an aryl group include 2,6-dimethylphenyl and mesityl.

The heterocyclic group as R₂ may be an unsubstituted heterocyclic group or a substituted heterocyclic group, but the latter is preferred. Examples of such a heterocyclic group include 2-pyridyl and 2-benzothiazolyl.

As R², substituted aryl groups or heterocyclic groups are preferred, with aryl groups having substituents at the 2- and 6-positions thereof being most preferred.

R₃ and R₄ each independently represents a hydrogen atom or an alkyl, cycloalkyl, aralkyl, alkenyl, aryl, heterocyclic, sulfonyl, acyl or carbamoyl group. They however do not represent a hydrogen atom simultaneously.

The heterocyclic group, sulfonyl group, acyl group and carbamoyl group as R₃ or R₄ are similar to those described above as R₂.

The aryl group as R₃ or R₄ may be an unsubstituted aryl group or a substituted aryl group, but the latter is preferred. Examples of the substituent for the substituted aryl group include those exemplified above as the substituent for the substituted aryl group in Q. Preferred substituents are also similar to those exemplified in Q. Examples of such an aryl group include 2-toluyl, mesityl and 4-octylphenyl.

A₁ and A₂ are both a substituted or unsubstituted carbon atom (that is, -CH= or -CR=, wherein R represents a substituent), or either one is a substituted or unsubstituted carbon atom and the other one is a nitrogen atom. Examples of the substituent for the substituted carbon atom include those exemplified above as the substituent for the substituted aryl group in Q. Preferred substituents are also similar to those exemplified in Q.

In the formula (II), Q, R₂, R₃, R₄, A₁ and A₂ have the same meanings as described in Q, R₂, R₃, R₄, A₁ and A₂ in the formula (I), respectively.

In the formula (III), R₁ has the same meaning as R₁ of the formula (I).

X represents a halogen atom or a sulfonyloxy group, of which a chlorine or bromine atom, or a benzenesulfonyloxy, toluenesulfonyloxy or methanesulfonyloxy group is preferred.

In the present invention, it is especially preferred when the formulas (I) and (II) are the formulas (IV) and (V), respectively.

In the formulas (IV) and (V), , R₁, R₂, R₃, R₄, A₁ and A₂ have the same meanings as , R₁, R₂, R₃, R₄, A₁ and A₂ in the formula (I), respectively. R₁' represents , an aryl group or a heterocyclic group.

R₅ represents a hydrogen atom or an alkyl, cycloalkyl, aryl, heterocyclic or acyl group. The alkyl, cycloalkyl, aryl, heterocyclic and acyl groups have the same meanings with the alkyl, cycloalkyl, aryl, heterocyclic and acyl groups as described above in R₂. R₂ preferably represents an isopropyl or tert-butyl group, with a tert-butyl group being most preferred. R₆ represents a hydrogen atom, a halogen atom or a cyano group, with a cyano group being most preferred.

In the present invention, the formula (III) is more preferably the formula (VI).

In the formula (VI), X has the same meaning as described in the formula (III).
Y represents a substituent. Examples of the substituent include those given as the substituent for the substituted aryl group in Q and the preferred substituents are similar to those given in Q. As Y, a halogen atom, or a sulfamoyl, carboxyl or sulfo group is more preferred, with a sulfamoyl, carboxyl or sulfo group being more preferred.

n stands for an integer of from 0 to 4 and it means the number of the substituents Y. As n, an integer of from 0 to 2 is preferred, with 0 or 1 being more preferred.

A description will next be made of the phase transfer catalyst to be used in the present reaction. There is no particular limitation imposed on the phase transfer catalyst to be used in the present reaction and those known in the organic synthesis field are usable. Preferred examples of the phase transfer catalyst include organic salts such as quaternary ammonium salts (ex. tetrabutylammonium bromide, tetrabutylammonium chloride and tetramethylammonium bromide) and quaternary phosphonium salts (ex. tetrabutylphosphonium bromide, tetrabutylphosphonium chloride and tetramethylphosphonium bromide) and ether compounds (ex. 18-Crown-6 and PEG400). Of these, quaternary ammonium salts or quaternary phosphonium salts are preferred, with quaternary ammonium salts being more preferred.

The specific examples of the compounds represented by the formula (I) or formula (II) will next be described, but the compounds are not limited thereto.

**[Table 1]**

| | | | |
|---|---|---|---|
| 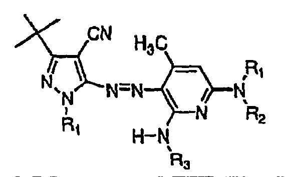 | | | |

| R₁ | | R₂ | R₃ |
|---|---|---|---|
| I-1 | 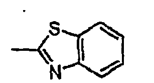 | 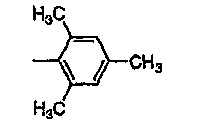 | 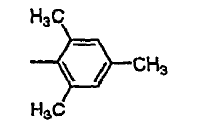 |
| I-2 | 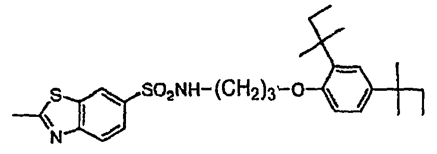 | 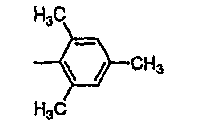 | 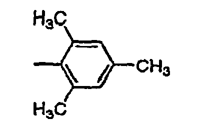 |
| I-3 | 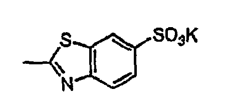 | 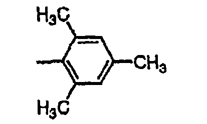 | 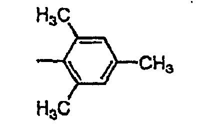 |
| I-4 | 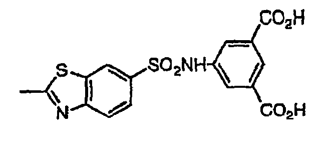 | 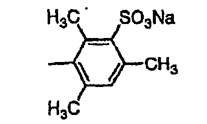 | 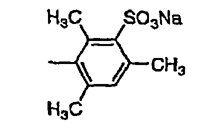 |
| I-5 | 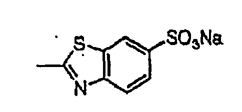 | 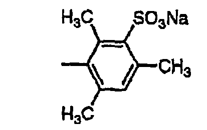 | 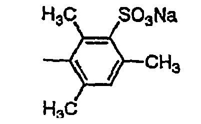 |

**[Table 2]**

| | | | |
|---|---|---|---|
| 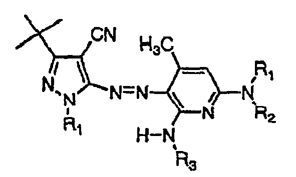 | | | |

| R₁ | | R₂ | R₃ |
|---|---|---|---|
| I-6 | 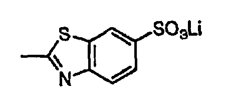 | 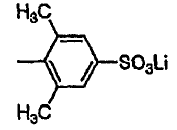 | 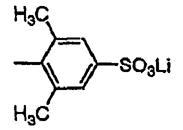 |
| I-7 | 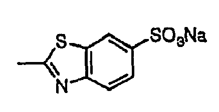 | 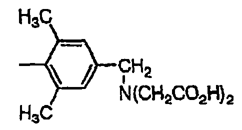 | 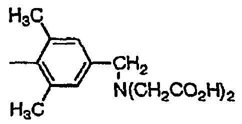 |
| I-8 | 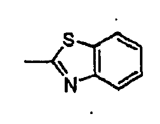 | 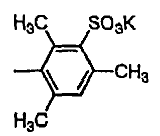 | 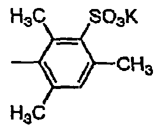 |
| I-9 | 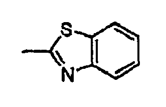 | 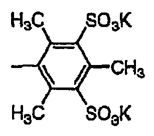 | 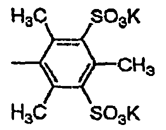 |
| I-10 | 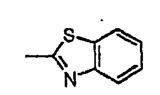 | 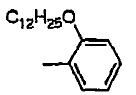 | 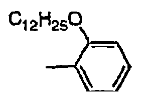 |

**[Table 3]**

| | | | | |
|---|---|---|---|---|
| 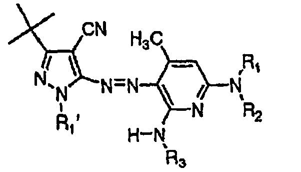 | | | | |

| R_{1'} | | R₁ | R₂ | R₃ |
|---|---|---|---|---|
| I-11 | 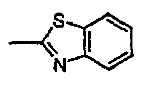 | 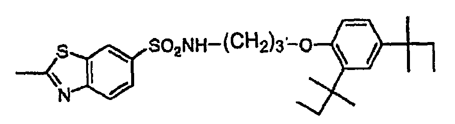 | 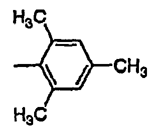 | 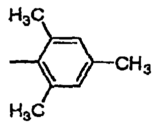 |
| I-12 | 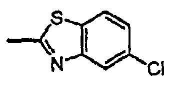 | 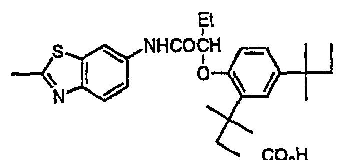 | 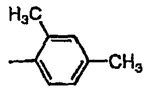 | 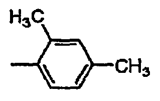 |
| I-13 | 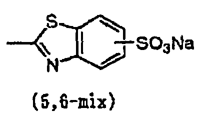 | 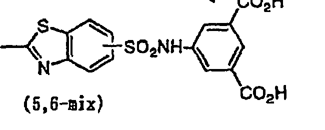 | 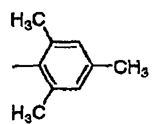 | 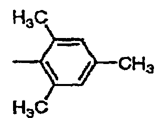 |
| I-14 | 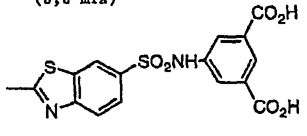 | 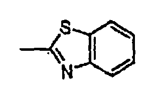 | 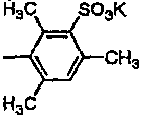 | 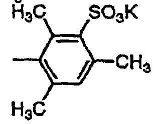 |
| I-15 | 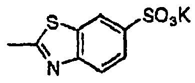 | 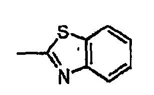 | 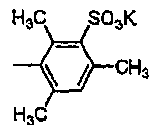 | 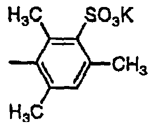 |

**[Table 4]**

| | | | | | | | |
|---|---|---|---|---|---|---|---|
| 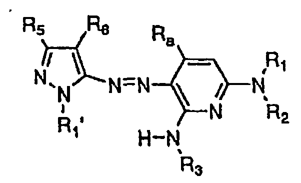 | | | | | | | |

| | R_{1'} | R₁ | Rₐ | R₂ | R₃ | R₅ | R₆ |
|---|---|---|---|---|---|---|---|
| I-16 | 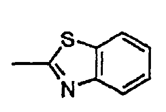 | 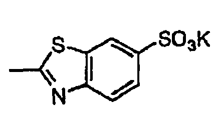 | -CH₃ | 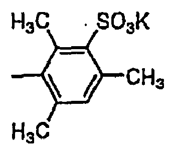 | 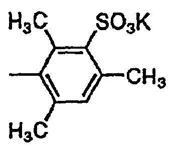 | —tBu | —CN |
| I-17 | 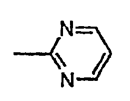 | 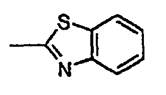 | -CO₂Et | 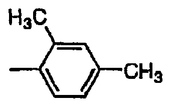 | 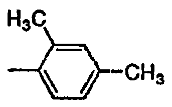 | —tBu | —Br |
| I-18 | 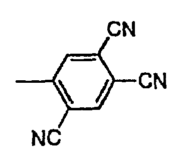 | 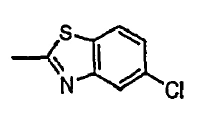 | —H | 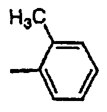 | —SO₂CH₃ | —tBu | —CN |

**[Table 5]**

| | | | | | | |
|---|---|---|---|---|---|---|
| 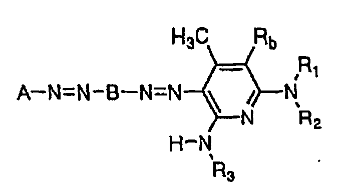 | | | | | | |

| | A | B | R₁ | R_{b} | R₂ | R₃ |
|---|---|---|---|---|---|---|
| I-19 | 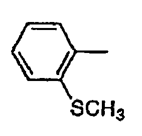 | 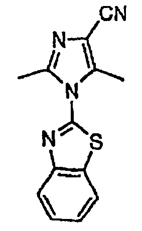 | 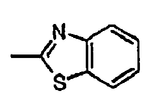 | —CN | 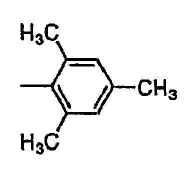 | 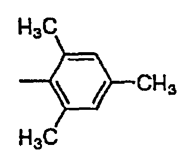 |
| I-20 | 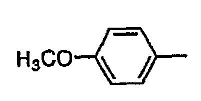 | 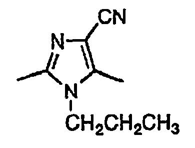 | 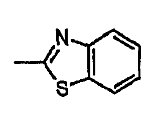 | —CN | 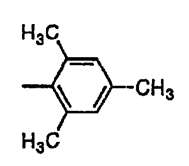 | 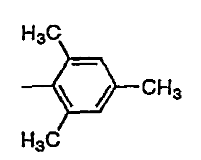 |
| I-21 | 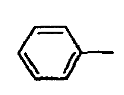 | 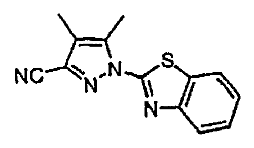 | 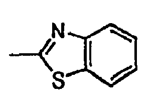 | —CN | 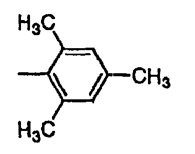 | 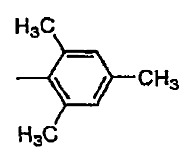 |
| I-22 | 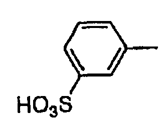 | 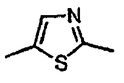 | 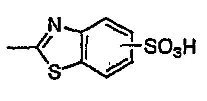 | —H | 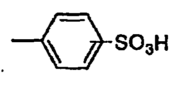 | 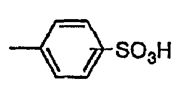 |

**[Table 6]**

| | | |
|---|---|---|
| 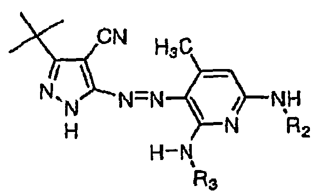 | | |

| | R₂ | R₃ |
|---|---|---|
| II-1 | 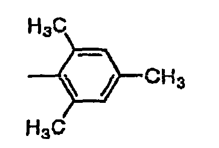 | 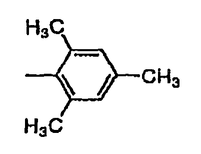 |
| II-2 | 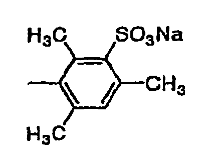 | 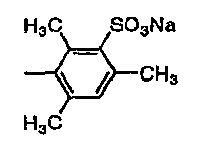 |
| II-3 | 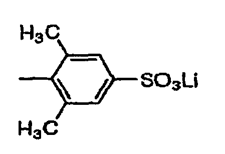 | 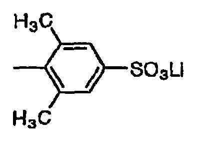 |
| II-4 | 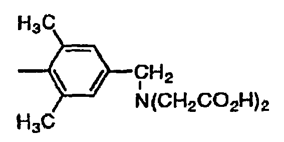 | 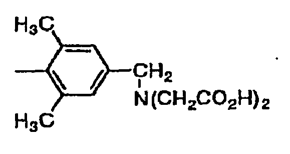 |
| II-5 | 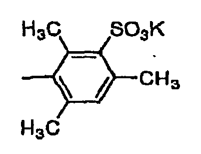 | 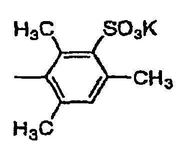 |
| II-6 | 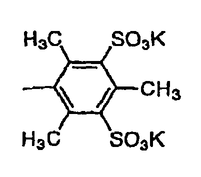 | 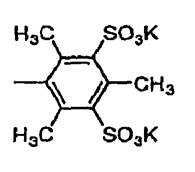 |
| II-7 | 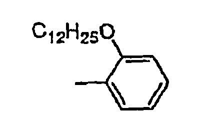 | 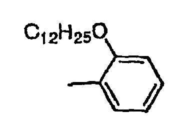 |

**[Table 7]**

| | | | |
|---|---|---|---|
| 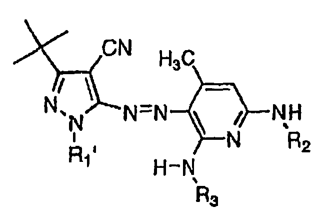 | | | |

| | R1' | R₂ | R₃ |
|---|---|---|---|
| II-8 | 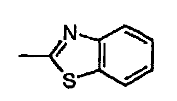 | 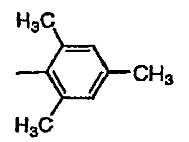 | 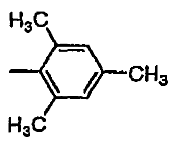 |
| II-9 | 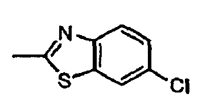 | 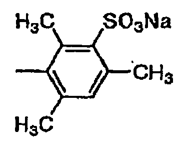 | 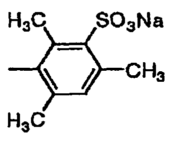 |
| II-10 | 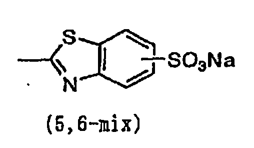 | 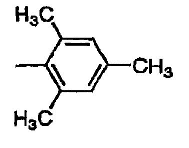 | 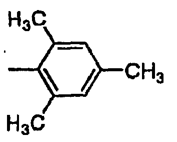 |
| II-11 | 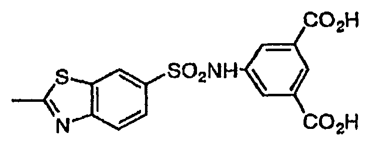 | 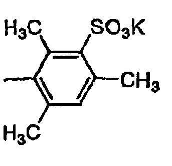 | 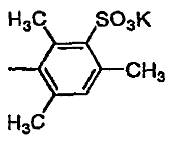 |
| II-12 | 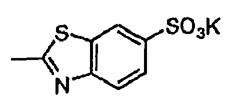 | 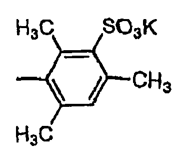 | 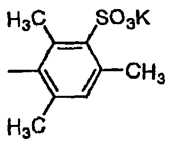 |

**[Table 8]**

| | | | | | | |
|---|---|---|---|---|---|---|
| 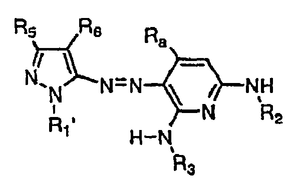 | | | | | | |

| | R_{1'} | Rₐ | R₂ | R₃ | R₅ | R₆ |
|---|---|---|---|---|---|---|
| II-13 | 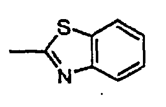 | -CH₃ | 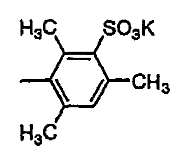 | 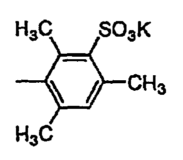 | ―tBu | -CN |
| II-14 | 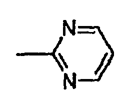 | ―CO₂Et | 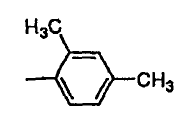 | 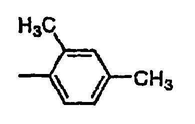 | ―tBu | -Br |
| II-15 | 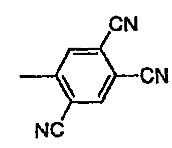 | —H | 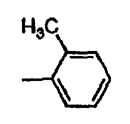 | ―SO₂CH₃ | ―tBu | -CN |

**[Table 9]**

| | | | | | |
|---|---|---|---|---|---|
| 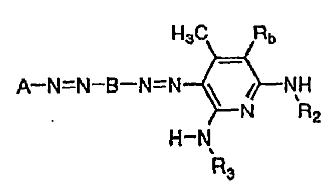 | | | | | |

| | A | B | R_{b} | R₂ | R₃ |
|---|---|---|---|---|---|
| II-16 | 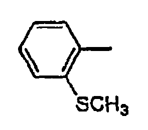 | 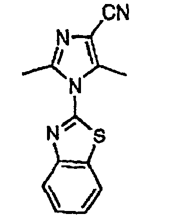 | —CN | 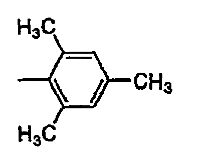 | 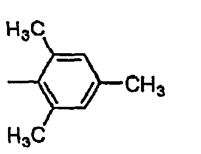 |
| II-17 | 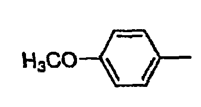 | 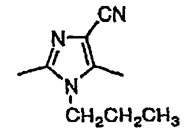 | —CN | 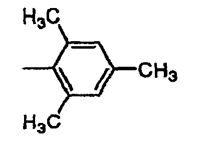 | 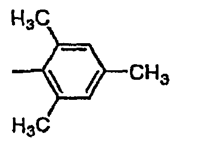 |
| II-18 | 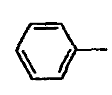 | 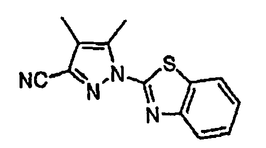 | —CN | 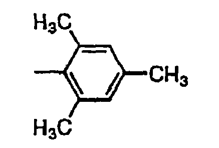 | 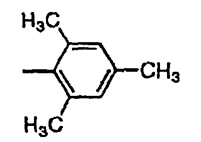 |
| II-19 | 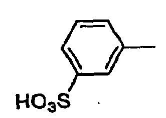 | 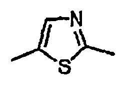 | —H | 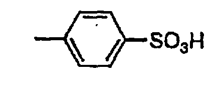 | 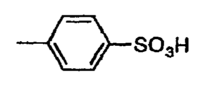 |

The process for synthesizing the compound of the formula (I) according to the invention will next be described specifically.

The synthesis process of the invention is characterized by that the compound represented by the formula (II) is reacted with an arylating or heterylating agent in the presence of a base and a phase transfer catalyst, preferably in the absence of an oxygen gas.

Examples of the organic solvent usable in the above reaction include, but not limited to, aromatic compounds (such as toluene and xylene), acetate esters (such as ethyl acetate and butyl acetate), amides (such as N,N-dimethylacetamide, N,N-dimethylformamide and N-methylpyrrolidone), nitriles (such as acetonitrile) and heterocycles (such as N,N'-dimethylimidazolidinone and sulfolane), and dimethylsulfoxide. The reaction may be effected in a homogeneous or heterogeneous solvent mixture system by using these solvents in combination. Moreover, the reaction may be effected in a homogenous or heterogeneous solvent mixture system of an organic solvent and water by using the above-described solvent system and water in combination. When a solvent mixture of an organic solvent and water is used, a volume ratio of the organic solvent: water preferably falls within a range of from 1:100 to 100:1, more preferably from 1:50 to 50:1.

The reaction solvent to be used in the present reaction is preferably added in an amount of from 0.1 to 50 times, more preferably 0.2 to 20 times, the weight of the compound represented by the formula (II).

As the base to be used in the invention, either an organic base or an inorganic base is usable, but the latter one is preferred. Examples of the inorganic base to be used in the reaction include, but not limited to, carbonates such as potassium carbonate and cesium carbonate, and metal hydroxides such as sodium hydroxide, potassium hydroxide, calcium hydroxide, barium hydroxide and magnesium hydroxide. Two or more of these bases may be used in combination.

The base to be used in the present reaction is preferably 100 equivalents or less, preferably from 2 to 20 equivalents, in the number of moles, relative to the compound of the formula (II) serving as a raw material.

The arylating or heterylating agent to be used in the reaction is preferably 20 equivalents or less, more preferably 2 to 10 equivalents, in the number of moles, relative to the compound of the formula (II) serving as a raw material.

The phase transfer catalyst to be used in the present reaction is preferably 0.001 to 2 equivalents, more preferably from 0.01 to 1 equivalent, in the number of moles, relative to the compound of the formula (II) serving as a raw material.

The reaction of the invention is preferably effected under oxygen-free conditions (under conditions having a low oxygen concentration). More specifically, the invention compound is preferably prepared while filling the reaction system with an inert gas such as nitrogen or argon.

The reaction temperature in the present reaction preferably ranges from 50°C to 150°C, with a range of from 80°C to 120°C being more preferred.

The time required for the present reaction usually depends on the reaction temperature, base or reactant, but is generally 0.1 to 24 hours.

The reaction is preferably effected for 3 to 12 hours at the reaction temperature of from 80 to 120°C.

The completion of the reaction can be confirmed by NMR, HPLC, TLC or the other method.

### [Examples]

The invention will hereinafter be described in detail by Examples. It should however be borne in mind that the present invention is not limited by them.

### Synthesis of Compound (I-1)

### (Example 1)

Under a nitrogen gas stream, a mixed solution of 9.64 g (17.5 mmol) of Compound (II-1) (containing a 1/2 molecule of methanol as a crystal solvent), 7.53 g (54.6 mmol) of potassium carbonate, 0.70 g (2.17 mmol) of tetrabutylammonium bromide, 11.81 g (69.6 mmol) of chlorobenzothiazole, and 20 mL of butyl acetate was heated for 5 hours at the inside temperature of from 100 to 110°C. The production ratio of the compound (I-1) was 82.1% (HPLC area%, detection wavelength at 254 nm). When the inside temperature was allowed to cool down to 70°C, 20 mL of water and 20 mL of ethyl acetate were added to separate the reaction mixture into layers. After concentration of the oil layer thus obtained, the concentrate was crystallized from 40 mL of methanol. The crystals thus precipitated were filtered. The resulting crystals were washed with 40 mL of methanol and dried, whereby 10.76 g (yield: 77%, purity: 98.0%) of Compound (I-1) was obtained. λmax=558 nm (DMF solution). m/Z (POSI)=802.

### (Example 2)

Under a nitrogen gas stream, a mixed solution of 9.64 g (17.5 mmol) of Compound (II-1) (containing a 1/2 molecule of methanol as a crystal solvent), 7.53 g (54.6 mmol) of potassium carbonate, 1.39 g (5.25 mmol) of 18-Crown-6, 11.81 g (69.6 mmol) of chlorobenzothiazole and 20 mL of butyl acetate was heated at the inside temperature of from 100 to 110°C. After 8 hours, 0.50 g (1.89 mmol) of 18-Crown-6 was added, and 1 hour after the addition, 2.01 g (14.5 mmol) of potassium carbonate was added. Two hours after the addition, the production ratio of Compound (I-18) was 77.6% (HPLC area%, detection wavelength at 254 nm). When the temperature was allowed to cool down to 70°C, 20 mL of water and 20 mL of ethyl acetate were added to separate the reaction mixture into layers. After concentration of the oil layer thus obtained, the concentrate was crystallized from 40 mL of methanol. The crystals thus precipitated were filtered. The resulting crystals were washed with 40 mL of methanol and dried, whereby 8.56 g (yield: 61%, purity: 97.9%) of Compound (I-1) was obtained.

### (Example 3)

Under a nitrogen gas stream, a mixed solution of 10.0 g (18.2 mmol) of Compound (II-1) (containing a 1/2 molecule of methanol as a crystal solvent), 20.7 g (149.6 mmol) of potassium carbonate, 1.81 g (5.61 mmol) of tetrabutylammonium bromide, 9.52 g (56.3 mmol) of chlorobenzothiazole, 20 mL of butyl acetate and 7.5 mL of water was heated for 5 hours at the inside temperature of from 90 to 100°C. The production ratio of Compound (I-1) was 91.7% (HPLC area%, detection wavelength at 254 nm). When the temperature was allowed to cool down to 70°C, 20 mL of water and 20 mL of ethyl acetate were added to separate the reaction mixture into layers. After concentration of the oil layer thus obtained, the concentrate was crystallized from 40 mL of methanol. The crystals thus precipitated were filtered. The resulting crystals were washed with 40 mL of methanol and dried, whereby 11.77 g (yield: 81%, purity: 98.1%) of Compound (I-1) was obtained.

### (Example 4)

Under a nitrogen gas stream, a mixed solution of 10.7 g (18.7 mmol) of Compound (II-1) (hydrochloride), 23.3 g (168.6 mmol) of potassium carbonate, 1.81 g (5.61 mmol) of tetrabutylammonium bromide, 9.52 g (56.3 mmol) of chlorobenzothiazole, 20 mL of butyl acetate and 7.5 mL of water was heated for 5.5 hours at the inside temperature of from 90 to 100°C. The production ratio of Compound (I-18) was 92.8% (HPLC area%, detection wavelength at 254 nm). When the temperature was allowed to cool down to 70°C, 20 mL of water and 20 mL of ethyl acetate were added to separate the reaction mixture into layers. After concentration of the oil layer thus obtained, the concentrate was crystallized from 40 mL of methanol. The crystals thus precipitated were collected by filtration. The resulting crystals were washed with 40 mL of methanol and dried, whereby 12.56 g (yield: 84%, purity: 98.2%) of Compound (I-1) was obtained.

### (Comparative Example 1) in the case where the reaction was effected without the addition of a phase transfer catalyst to the reaction system:

Under a nitrogen gas stream, a mixed solution of 3.0 g (5.45 mmol) of Compound (II-1) (containing a 1/2 molecule of methanol as a crystal solvent), 3.09 g (22.4 mmol) of potassium carbonate, 3.68 g (21.8 mmol) of chlorobenzothiazole and 7 mL of butyl acetate was heated for 6 hours at the inside temperature of from 90 to 100°C. By this reaction, no Compound (I-1) was formed and only Compound (II-8), that is, Compound (II) having only the hydrogen atom on the pyrazole ring thereof converted into benzothiazole, was prepared at a production ratio of 84.6% (HPLC area%, detection wavelength at 254 nm).

### (Comparative Example 2)

To 10.0 g (18.2 mmol) of Compound (II-1) (containing a 1/2 molecule of methanol as a crystal solvent), 10.3 g (74.8 mmol) of potassium carbonate and 12.7 g (74.8 mmol) of chlorobenzothiazole was added 70 mL of DMSO. Under nitrogen bubbling, the resulting mixture was heated for 4 hours at the inside temperature of 80°C. The production ratio of Compound (I-1) was 73.4% (HPLC area%, detection wavelength at 254 nm). After completion of the reaction, the crystals thus precipitated were collected by filtration and washed with 70 mL of DMSO. The crystals were then dispersed in 500 mL of water, filtered and dried, whereby 11.41 g (yield: 78%, purity: 88.1%) of Compound (I-1) was obtained.

### INDUSTRIAL APPLICABILITY

The present invention makes it possible to prepare, in a high yield and high purity, an azo compound useful as an intermediate or raw material for functional compounds such as dyes and pharmaceuticals.

## Claims

1. A process for preparing a compound represented by the formula (I) below, which comprises reacting a compound represented by the formula (II) below with at least one of an arylating and heterylating agents represented by the formula (III) below, in the presence of a base and a phase transfer catalyst: 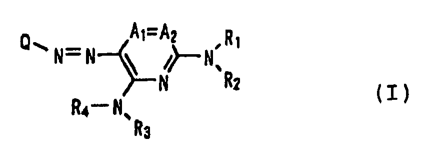
wherein Q represents an aryl or heterocyclic group,
R₁ represents an aryl or heterocyclic group,
R₂ represents an alkyl, cycloalkyl, alkenyl, aryl, heterocyclic, sulfonyl, acyl or carbamoyl group,
R₃ and R₄ each independently represents a hydrogen atom or an alkyl, cycloalkyl, alkenyl, aryl, heterocyclic, sulfonyl, acyl or carbamoyl group, with the proviso that R₃ and R₄ do not represent a hydrogen atom at the same time, and
A₁ and A₂ each are a substituted or unsubstituted carbon atom, or one of A₁ and A₂ represents a substituted or unsubstituted carbon atom and the other represents a nitrogen atom; 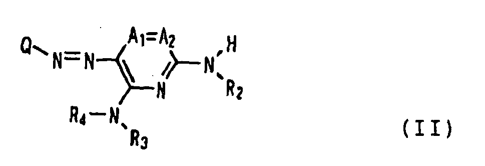
wherein Q, R₂, R₃, R₄, A₁ and A₂ have the same meanings as Q, R₂, R₃, R₄, A₁ and A₂ defined in the formula (I), respectively;
R₁-X (III)
wherein R¹ has the same meaning as R¹ defined in the formula (I) and X represents a halogen atom or a sulfonyloxy group.

2. The process as described in Claim 1, wherein Q in the formulas (I) and (II) represents pyrazole, thiazole, 1,2,4-thiadiazole, 1,3,4-thiadiazole, benzothiazole, triazole or imidazole.

3. The process as described in Claim 1, wherein the compound represented by the formula (I) is a compound represented by the formula (IV) below and the compound represented by the formula (II) is a compound represented by the formula (V) below: 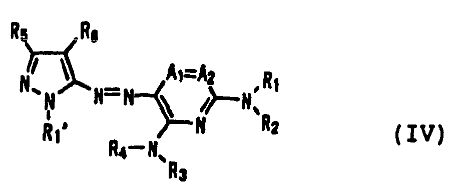 wherein R₁' represents an aryl or heterocyclic group, R₁, R₂, R₃, R₄, A₁ and A₂ have the same meanings as R₁, R₂, R₃, R₄, A₁ and A₂ in the formula (I), respectively, R₅ represents a hydrogen atom or an alkyl, cycloalkyl, aryl, heterocyclic or acyl group, and R₆ represents a hydrogen atom, a halogen atom or a cyano group; 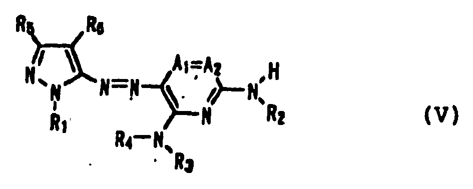 wherein R₁' represents an aryl group or a heterocyclic groups R₂, R₃, R₄, R₅, R₆, A₁ and A₂ have the same meanings as R₂, R₃, R₄, R₅, R₆, A₁ and A₂ in the formula (IV), respectively.

4. The process as described in Claim 1, wherein the compound represented by the formula (I) is a compound represented by the formula (IV') below and the compound represented by the formula (II) is a compound represented by the formula (V') below: 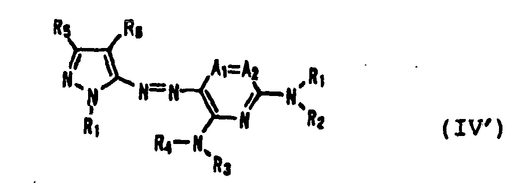 wherein R₁, R₂, R₃, R₄, A₁ and A₂ have the same meanings as R₁, R₂, R₃, R₁, A₁ and A₂ in the formula (I), respectively, R₅ represents a hydrogen atom or an alkyl, cycloalkyl, aryl, heterocyclic or acyl group, and R₆ represents a hydrogen atom, a halogen atom or a cyano group; 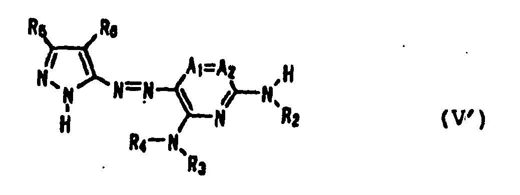 wherein , R₂, R₃, R₄, R₅, R₆, A₁ and A₂ have the same meanings as R₂, R₃, R₄, R₅, R₆, A₁ and A₂ in the formula (IV'), respectively,

5. The process as described in any one of Claims 1 to 4, wherein the compound represented by the formula (III) is a compound represented by the formula (VI) below: 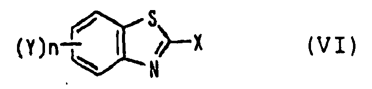 wherein X has the same meaning as defined in the formula (III), Y represents a substituent, and n represents an integer of from 0 to 4.

6. The process as described in any one of Claims 1 to 5, wherein the reaction is carried out in the presence of a mixed solvent including an organic solvent and water, and a volume ratio of the organic solvent to water is a range of from 1:100 to 100:1.

7. The process as described in any one of Claims 1 to 6, wherein the phase transfer catalyst is at least one selected from the group consisting of quaternary ammonium salts, quaternary phosphonium salts and ether compounds.

8. The process as described in any one of Claims 1 to 7, wherein the base is an inorganic base.

9. The process as described in any one of Claims 1 to 8, wherein the base is used in an amount of 100 equivalents or less in the number of moles, to the compound represented by the formula (II).

10. The process as described in any one of Claims 1 to 9, wherein the phase transfer catalyst is used in an amount of 0.001 to 2 equivalents in the number of moles, to the compound represented by the formula (II).

11. The process as described in any one of Claims 1 to 10, wherein the reaction is carried out while filling the reaction system with an inert gas.

12. The process as described in any one of Claims 1 to 11, wherein the reaction temperature is from 50°C to 150°C.

13. The process as described in any one of Claims 1 to 12, wherein the reaction time is 3 to 12 hours and the reaction temperature is 80 to 120°C.

14. The process as described in any one of Claims 1 to 13, wherein one of the arylating and heterylating agents represented by the formula (III) is used in an amount of 20 equivalents or less in the number of moles, to the compound represented by the formula (II).

## Patentansprüche

1. Verfahren zum Herstellen einer Verbindung, die durch die nachstehende Formel (I) wiedergegeben ist, welches das Umsetzen einer Verbindung, die durch die nachstehende Formel (II) wiedergegeben ist, mit wenigstens einem von den Arylierungs- und Heterylierungsmitteln, die durch die nachstehende Formel (III) wiedergegeben sind, in Gegenwart einer Base und eines Phasentransferkatalysators umfasst: 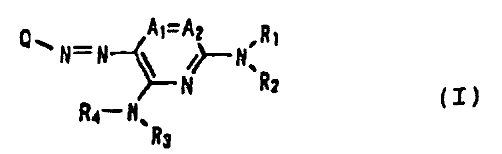 wobei Q eine Arylgruppe oder eine heterocyclische Gruppe bedeutet, R₁ eine Arylgruppe oder eine heterocyclische Gruppe bedeutet, R₂ eine Alkylgruppe, Cycloalkylgruppe, Alkenylgruppe, Arylgruppe, heterocyclische Gruppe, Sulfonylgruppe, Acylgruppe oder Carbamoylgruppe bedeutet, R₃ und R₄ jeweils unabhängig voneinander ein Wasserstoffatom oder eine Alkylgruppe, Cycloalkylgruppe, Alkenylgruppe, Arylgruppe, heterocyclische Gruppe, Sulfonylgruppe, Acylgruppe oder Carbamoylgruppe bedeutet, mit der Maßgabe, dass R₃ und R₄ nicht gleichzeitig ein Wasserstoffatom bedeuten, und A₁ und A₂ jeweils ein substituiertes oder unsubstituiertes Kohlenstoffatom sind oder eines von A₁ und A₂ ein substituiertes oder unsubstituiertes Kohlenstoffatom bedeutet und das andere ein Stickstoffatom bedeutet; 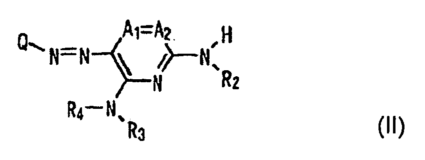 wobei Q, R₂, R₃, R₄, A₁ und A₂ die gleichen Bedeutungen haben wie Q, R₂, R₃, R₄, A₁ bzw. A₂, die in der Formel (I) definiert sind;
R₁-X (III)
wobei R¹ die gleiche Bedeutung hat wie R¹, das in der Formel (I) definiert ist, und X ein Halogenatom oder eine Sulfonyloxygruppe bedeutet.

2. Verfahren nach Anspruch 1, wobei Q in den Formeln (I) und (II) Pyrazol, Thiazol, 1,2,4-Thiadiazol, 1,3,4-Thiadiazol, Benzothiazol, Triazol oder Imidazol bedeutet.

3. Verfahren nach Anspruch 1, wobei die Verbindung, die durch die Formel (I) wiedergegeben ist, eine Verbindung ist, die durch die nachstehende Formel (IV) wiedergegeben ist, und die Verbindung, die durch die Formel (II) wiedergegeben ist, eine Verbindung ist, die durch die nachstehende Formel (V) wiedergegeben ist: 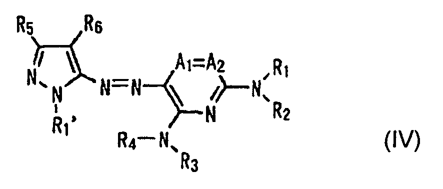 wobei R₁' eine Arylgruppe oder eine heterocyclische Gruppe bedeutet, R₁, R₂, R₃, R₄, A₁ und A₂ die gleichen Bedeutungen haben wie R₁, R₂, R₃, R₄, A₁ bzw. A₂ in der Formel (I), R₅ ein Wasserstoffatom oder eine Alkylgruppe, Cycloalkylgruppe, Arylgruppe, heterocyclische Gruppe oder Acylgruppe bedeutet, und R₆ ein Wasserstoffatom, ein Halogenatom oder eine Cyanogruppe bedeutet; 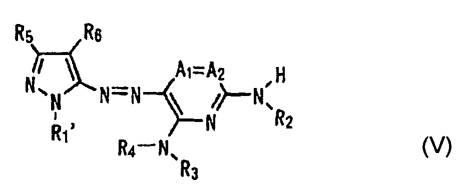 wobei R₁' eine Arylgruppe oder eine heterocyclische Gruppe bedeutet, R₂, R₃, R₄, R₅, R₆, A₁ und A₂ die gleichen Bedeutungen haben wie R₂, R₃, R₄, R₅, R₆, A₁ bzw. A₂ in der Formel (IV).

4. Verfahren nach Anspruch 1, wobei die Verbindung, die durch die Formen (I) wiedergegeben ist, eine Verbindung ist, die durch die nachstehende Formel (IV') wiedergegeben ist, und die Verbindung, die durch die Formel (II) wiedergegeben ist, eine Verbindung ist, die durch die nachstehende Formel (V') wiedergegeben ist: 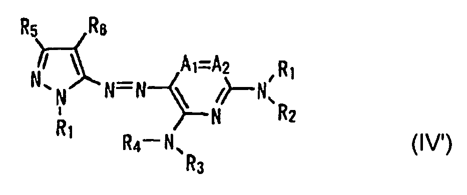 wobei R₁, R₂, R₃, R₄, A₁ und A₂ die gleichen Bedeutungen haben wie R₁, R₂, R₃, R₄, A₁ bzw. A₂ in der Formel (I), R₅ ein Wasserstoffatom oder eine Alkylgruppe, Cycloalkylgruppe, Arylgruppe, heterocyclische Gruppe oder Acylgruppe bedeutet und R₆ ein Wasserstoffatom, ein Halogenatom oder eine Cyanogruppe bedeutet; 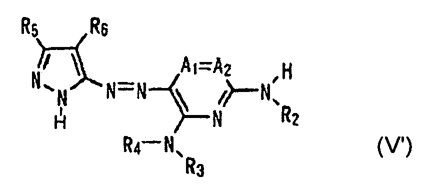 wobei R₂, R₃, R₄, R₅, R₆, A₁ und A₂ die gleichen Bedeutungen haben wie R₂, R₃, R₄, R₅, R₆, A₁ bzw. A₂ in der Formel (IV').

5. Verfahren nach einem der Ansprüche 1 bis 4, wobei die Verbindung, die durch die Formel (III) wiedergegeben ist, eine Verbindung ist, die durch die nachstehende Formel (VI) wiedergegeben ist: 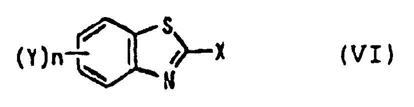 wobei X die gleiche Bedeutung hat, wie sie in der Formel (III) definiert ist, Y einen Substituenten bedeutet und n eine ganze Zahl von 0 bis 4 bedeutet.

6. Verfahren nach einem der Ansprüche 1 bis 5, wobei die Reaktion in Gegenwart eines Lösungsmittelgemisches, das ein organisches Lösungsmittel und Wasser enthält, durchgeführt wird, und ein Volumenverhältnis des organischen Lösungsmittels zu Wasser in einem Bereich von 1:100 bis 100:1 1 liegt.

7. Verfahren nach einem der Ansprüche 1 bis 6, wobei der Phasentransferkatalysator wenigstens einer, ausgewählt aus der Gruppe bestehend aus quartären Ammoniumsalzen, quartären Phosphoniumsalzen und Etherverbindungen, ist.

8. Verfahren nach einem der Ansprüche 1 bis 7, wobei die Base eine anorganische Base ist.

9. Verfahren nach einem der Ansprüche 1 bis 8, wobei die Base in einer Menge von 100 Äquivalenten oder weniger, bezogen auf die Molzahl, zu der Verbindung, die durch die Formel (II) wiedergegeben ist, verwendet wird.

10. Verfahren nach einem der Ansprüche 1 bis 9, wobei der Phasentransferkatalysator in einer Menge von 0,001 bis 2 Äquivalenten, bezogen auf die Molzahl, zu der Verbindung, die durch die Formel (II) wiedergegeben ist, verwendet wird.

11. Verfahren nach einem der Ansprüche 1 bis 10, wobei die Reaktion durchgeführt wird, während das Reaktionssystem mit einem Inertgas gefüllt wird.

12. Verfahren nach einem der Ansprüche 1 bis 11, wobei die Reaktionstemperatur 50 °C bis 150 °C beträgt.

13. Verfahren nach einem der Ansprüche 1 bis 12, wobei die Reaktionszeit 3 bis 12 Stunden beträgt und die Reaktionstemperatur 80 bis 120 °C beträgt.

14. Verfahren nach einem der Ansprüche 1 bis 13, wobei eines der Arylierungs- und Heterylierungsmittel, die durch die Formel (III) wiedergegeben sind, in einer Menge von 20 Äquivalenten oder weniger, bezogen auf die Molzahl, zu der Verbindung, die durch die Formel (II) wiedergegeben ist, verwendet wird.

## Revendications

1. Procédé de préparation d'un composé représenté par la formule (I) ci-dessous, lequel comprend la réaction d'un composé représenté par la formule (II) ci-dessous avec au moins un parmi des agents d'arylation et d'hétérylation représenté par la formule (III) ci-dessous, en présence d'une base et d'un catalyseur de transfert de phase : 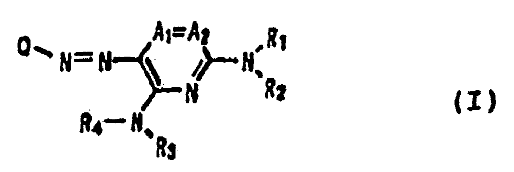
où Q représente un groupe aryle ou hétérocyclique,
R₁ représente un groupe aryle ou hétérocyclique,
R₂ représente un groupe alkyle, cycloalkyle, alcényle, aryle, hétérocyclique, sulfonyle, acyle ou carbamoyle,
R₃ et R₄ représentent chacun indépendamment un atome d'hydrogène ou un groupe alkyle, cycloalkyle, alcényle, aryle, hétérocyclique, sulfonyle, acyle ou carbamoyle, à condition que R₃ et R₄ ne représentent pas simultanément un atome d'hydrogène, et
A₁ et A₂ sont chacun un atome de carbone substitué ou non substitué, ou un parmi A₁ et A₂ représente un atome de carbone substitué ou non substitué et l'autre représente un atome d'azote ; 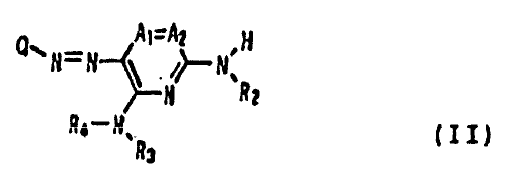
où Q, R₂, R₃, R₄, A₁ et A₂ ont les mêmes significations que Q, R₂, R₃, R₄, A₁ et A₂ définis dans la formule (I), respectivement ;
R₁-X (III)
où R¹ a la même signification que R¹ défini dans la formule (I) et X représente un atome d'halogène ou un groupe sulfonyloxy.

2. Procédé selon la revendication 1, dans lequel Q dans les formules (I) et (II) représente le groupe pyrazole, thiazole, 1,2,4-thiadiazole, 1,3,4-thiadiazole, benzothiazole, triazole ou imidazole.

3. Procédé selon la revendication 1, dans lequel le composé représenté par la formule (I) est un composé représenté par la formule (IV) ci-dessous et le composé représenté par la formule (II) est un composé représenté par la formule (V) ci-dessous : 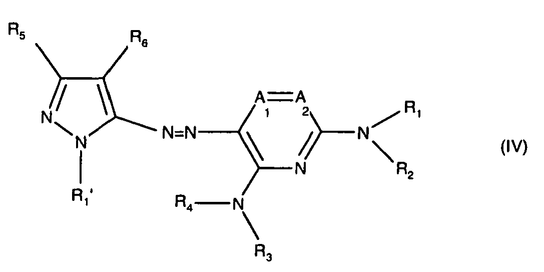 où R₁' représente un groupe aryle ou hétérocyclique, R₁, R₂, R₃, R₄, A₁ et A₂ ont les mêmes significations que R₁, R₂, R₃, R₄, A₁ et A₂ dans la formule (I), respectivement, R₅ représente un atome d'hydrogène ou un groupe alkyle, cycloalkyle, aryle, hétérocyclique ou acyle, et R₆ représente un atome d'hydrogène, un atome d'halogène ou un groupe cyano ; 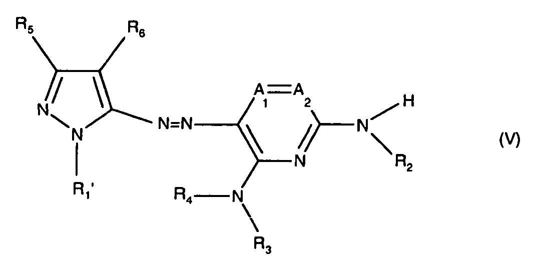 où R₁' représente un groupe aryle ou un groupe hétérocyclique, R₂, R₃, R₄, R₅, R₆, A₁ et A₂ ont les mêmes significations que R₂, R₃, R₄, R₅, R₆, A₁ et A₂ dans la formule (IV), respectivement.

4. Procédé selon la revendication 1, dans lequel le composé représenté dans la formule (I) est un composé représenté par la formule (IV') ci-dessous et le composé représenté par la formule (II) est un composé représenté par la formule (V') ci-dessous : 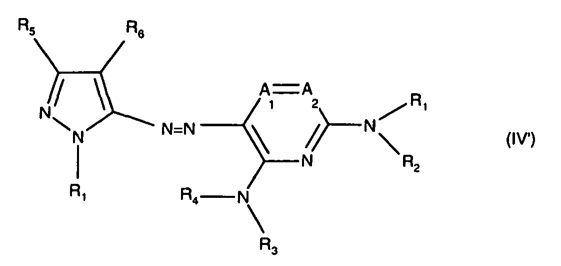 où R₁, R₂, R₃, R₄, A₁ et A₂ ont les mêmes significations que R₁, R₂, R₃, R₄, A₁ et A₂ dans la formule (I), respectivement, R₅ représente un atome d'hydrogène ou un groupe alkyle, cycloalkyle, aryle, hétérocyclique ou acyle, et R₆ représente un atome d'hydrogène, un atome d'halogène ou un groupe cyano ; 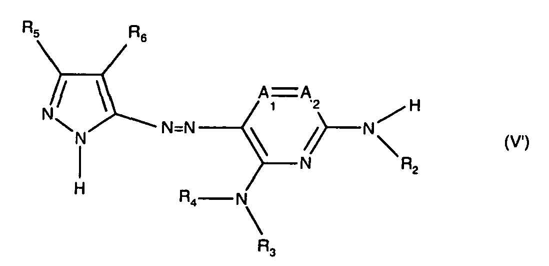 où R₂, R₃, R₄, R₅, R₆, A₁ et A₂ ont les mêmes significations que R₂, R₃, R₄, R₅, R₆, A₁ et A₂ dans la formule (IV'), respectivement.

5. Procédé selon l'une quelconque des revendications 1 à 4, dans lequel le composé représenté par la formule (III) est un composé représenté par la formule (VI) ci-dessous : 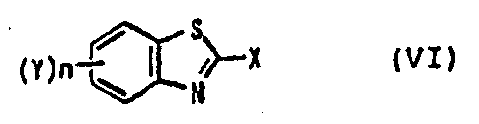 où X a la même signification que définie dans la formule (III), Y représente un substituant, et n représente un nombre entier de 0 à 4.

6. Procédé selon l'une quelconque des revendications 1 à 5, dans lequel la réaction est réalisée en présence d'un solvant mixte comprenant un solvant organique et de l'eau, et un rapport volumique du solvant organique à l'eau se trouve dans un intervalle de 1 : 100 à 100 : 1.

7. Procédé selon l'une quelconque des revendications 1 à 6, dans lequel le catalyseur de transfert de phase est au moins un choisi dans le groupe constitué de sels d'ammonium quaternaire, de sels de phosphonium quaternaire et de composés d'éthers.

8. Procédé selon l'une quelconque des revendications 1 à 7, dans lequel la base est une base inorganique.

9. Procédé selon l'une quelconque des revendications 1 à 8, dans lequel la base est utilisée dans une quantité de 100 équivalents ou moins en nombre de moles, par rapport au composé représenté par la formule (II).

10. Procédé selon l'une quelconque des revendications 1 à 9, dans lequel le catalyseur de transfert de phase est utilisé dans une quantité de 0,001 à 2 équivalents en nombre de moles, par rapport au composé représenté par la formule (II).

11. Procédé selon l'une quelconque des revendications 1 à 10, dans lequel la réaction est réalisée tout en remplissant le système réactionnel avec un gaz inerte.

12. Procédé selon l'une quelconque des revendications 1 à 11, dans lequel la température de la réaction est de 50°C à 150°C.

13. Procédé selon l'une quelconque des revendications 1 à 12, dans lequel la durée de la réaction est de 3 à 12 heures et la température de la réaction est de 80 à 120°C.

14. Procédé selon l'une quelconque des revendications 1 à 13, dans lequel un des agents d'arylation et d'hétérylation représentés par la formule (III) est utilisé dans une quantité de 20 équivalents ou moins en nombre de moles, par rapport au composé représenté par la formule (II).
